# DEMANDE DE BREVET EUROPEEN

(11) **EP 2 292 950 A1**
(43) Date de publication de la demande: **09.03.2011**
(21) Numéro de dépôt: 10305847.5
(22) Date de dépôt: 30.07.2010
(51) Int. Cl.: F16H 61/32

(54) **Dispositif d'assistance actif au passage des vitesses**

(30) Priorité: 04.09.2009 FR 0956040
(71) Demandeur: Renault S.A.S., 92100 Boulogne-Billancourt (FR)
(72) Inventeur: Gargouri, Yacine, 75014, PARIS (FR); Raoul, Michel, 78990, ELANCOURT (FR)

(57) **Abrégé**

Dispositif d'assistance actif au passage des vitesses pour boîte de vitesses à arbres parallèles comprenant un moteur électrique d'assistance (12) piloté agissant parallèlement au conducteur sur un levier de passage (9) externe à la boîte selon la vitesse à engager et la phase de l'engagement pour faciliter les passages, **caractérisé en ce que** ce le moteur d'assistance (12) est logé dans un boîtier de protection fermé (13), intégré au palier (2) d'un axe de commande interne (3) solidaire du levier (9).

## Description

La présente invention porte sur un dispositif d'assistance actif au passage des vitesses utilisé dans un mécanisme de changement de rapport de boite de vitesses manuelle pour véhicule automobile.

Plus précisément, elle a pour objet un dispositif d'assistance actif au passage des vitesses pour boîte de vitesses à arbres parallèles comprenant un moteur électrique d'assistance piloté, agissant parallèlement au conducteur sur un levier de passage externe à la boîte, selon la vitesse à engager et la phase de l'engagement, pour faciliter les passages.

Une des critiques principales faites aux boîtes de vitesses manuelles est que la commande semble « accrocher » lors des changements de rapport. Cette sensation est liée au fait que le conducteur intervient sur les mécanismes internes de la boîte de vitesses à partir de son levier, et ressent en retour, au travers de celui-ci, les efforts et les chocs des pièces internes de la boîte lors des changements de rapport.

Lorsqu'on utilise des dispositifs d'accouplement, tels que des synchroniseurs conventionnels à baladeurs et à crabots, on peut établir un lien très fort entre cette sensation désagréable, et le choc des dents du baladeur contre celles du pignon, lors du crabotage.

Ces chocs sont dus à la rotation relative du pignon et du baladeur pendant la phase intermédiaire, entre la synchronisation proprement dite, et le crabotage, où se produit un « désindexage », appelé aussi « dévirage », du pignon par rapport au baladeur, pendant lequel le baladeur et le pignon perdent temporairement tout lien en rotation.

On sait également que les commandes de vitesses à câbles accentuent ce phénomène, par rapport aux anciennes commandes à barre rigide.

Pour remédier à ce problème, on sait augmenter l'inertie de la commande de manière à lisser les pics d'efforts, en intégrant par exemple à la chaîne cinématique de commande reliant le levier du conducteur et les synchroniseurs, une masse additionnelle d'inertie à débattement latéral.

Toutefois, les masses additionnelles à débattement déporté, alourdissent le levier de passage (et donc le véhicule). Par ailleurs, ces masses posent vite un problème d'encombrement lorsqu'elles doivent débattre à l'intérieur du compartiment moteur, et elles augmentent la sensibilité aux vibrations (grésillement de la commande). Enfin, dans des circonstances de conduite particulières, et sous de fortes accélérations, elles peuvent provoquer des lâchers de vitesses.

Les dispositifs d'assistance actifs offrent un autre type de solution aux problèmes de chocs de vitesses. Par la publication EP 1 128 096, on connaît notamment un dispositif d'assistance électrique au passage des vitesses, dont le moteur agit sur le levier de passage externe de la boîte qui reçoit l'extrémité du câble de passage. Le moteur d'assistance, agissant sur le levier dans le même sens que le conducteur par un agencement de bras articulés, facilite l'engagement et le dégagement des vitesses. Toutefois, il n'est pas véritablement intégré dans la boîte de vitesses, et la transmission du mouvement par bras articulés entre le moteur et le levier de passage n'assure pas la précision souhaitée.

La présente invention vise à palier les inconvénients d'un tel dispositif d'assistance, en vue d'adapter en permanence l'effort d'assistance, au passage et à la phase du passage de vitesse concernée.

Dans ce but, elle propose que le moteur soit logé dans un boîtier de protection fermé, intégré au palier d'un axe de commande interne solidaire du levier.

De préférence, le boîtier de protection constitue une excroissance du palier de l'axe de commande interne.

Selon un mode de réalisation particulier de l'invention, le moteur d'assistance agit sur le levier de passage par l'intermédiaire d'un système multiplicateur de vitesse constitué par un train épicycloïdal.

D'autres caractéristiques et avantages de la présente invention ressortiront clairement de la description suivante d'un mode de réalisation non limitatif de celle-ci, en liaison avec les dessins annexés, sur lesquels :
- la figure 1, est une coupe de ce dispositif, et
- la figure 2 est une vue de dessus du même dispositif.

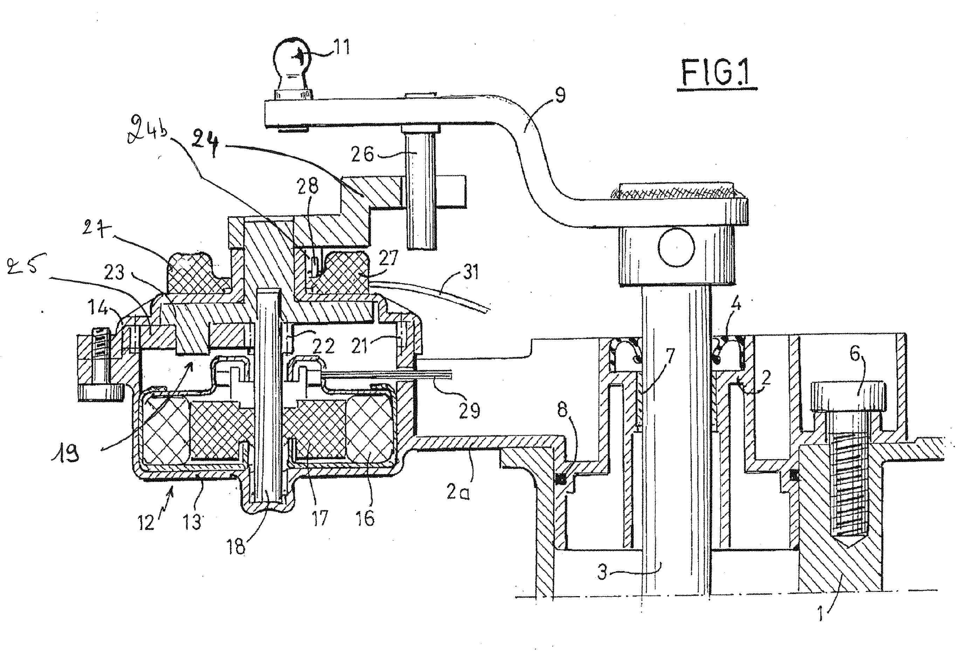

Sur la figure 1 on voit apparaître en coupe partielle le carter 1 d'une boîte de vitesses à arbres parallèles et engrenage (non représentée). Le carter 1 soutient une pièce rapportée 2, constituant le palier d'un axe de commande interne 3 du mécanisme de passage, non représenté. L'entrée de l'axe 3 dans le palier 2 est protégée par un joint d'étanchéité à lèvres 4. Le palier 2 est fixé sur le carter 3 par au moins une vis de fixation 6. La figure montre également la bague de guidage 7 de l'axe et le joint d'étanchéité 8 du palier de guidage 2 sr le carter 1.

L'axe de commande interne 3 est solidaire d'un levier externe de passage de vitesses 9 recevant sur une rotule d'accrochage, 11 une extrémité du câble de commande de passage de vitesses (non représenté), relié par son autre extrémité au levier de vitesses du conducteur.

Le dispositif d'assistance au passage des vitesses proposé est un dispositif actif. Il comprend un moteur électrique d'assistance piloté 12. Le moteur 12 est logé dans un boîtier de protection fermé 13, intégré au palier 2 de l'axe de commande interne 3 de la boîte et fermé par un couvercle 14. Plus précisément, le boîtier de protection 13 part d'une excroissance 2a du palier 2 de l'axe de commande interne 3.

Le moteur d'assistance comporte un stator 16 et un rotor 17 solidaire d'un axe de sortie 18. Il agit sur le levier de passage 9 par l'intermédiaire d'un système multiplicateur de vitesse 19, constitué par un train épicycloïdal, logé dans le même boîtier que le moteur d'assistance, fermé par le couvercle 14.

Le train 19 comprend une couronne fixe 21 faisant partie du boîtier 14, un planétaire 22 solidaire de l'axe de sortie 18 du moteur, un porte-satellites 23 lié à un levier d'assistance 24 de l'axe de passage, et au moins un satellite 25 entraîné par le porte-satellites 23. La sortie du train 19 s'effectue par le porte-satellites 23 solidaire du levier d'assistance 24 qui agit sur le levier de passage 9 par l'intermédiaire d'un pion d'entraînement 26.

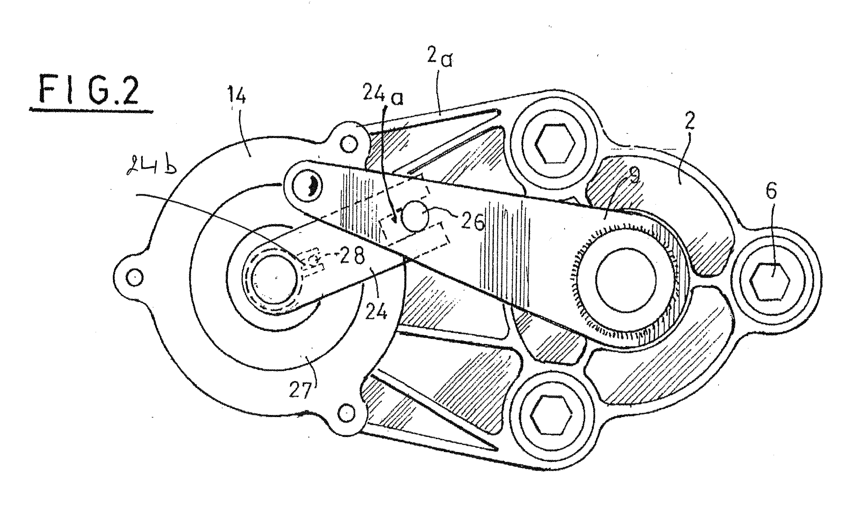

Le couvercle 14 porte un potentiomètre 27 de position angulaire du levier d'assistance 24. Le potentiomètre 27 possède un doigt d'entraînement 28 qui se déplace dans une ouverture 24b du levier d'assistance 24 (voir figure 2). Le levier d'assistance 24 entraîne ainsi le potentiomètre 27 qui indique sa position angulaire à un calculateur de pilotage (non représenté). La figure montre les fils d'alimentation 29 du moteur 12, et les fils de liaison 31 (alimentation et information) du potentiomètre 27 reliés, au calculateur.

Sur la figure 1, le levier de passage 9 est en position de point mort, aligné avec le levier d'assistance 24. Son pion 26 est au fond de l'ouverture 24a du levier 24.

Sur la figure 2, on voit le palier de guidage 2 de l'axe de commande interne et ses vis de fixation 6 sur le carter 1. On reconnaît également l'excroissance 2a du palier 2 portant le dispositif d'assistance, le couvercle 14, le potentiomètre 27, et le doigt d'entraînement 28 du potentiomètre 27. Le levier de passage 9 est représenté en position de rapport engagé, dans laquelle il ouvre un angle avec le levier d'assistance 24. Par rapport à la figure 1, son pion d'entraînement 26 s'est avancé vers l'extérieur de l'ouverture 24a du levier d'assistance 24.

Grâce à ces dispositions, le moteur d'assistance 12 peut agir parallèlement au conducteur sur le levier de passage 7, selon la vitesse à engager et la phase de l'engagement, de manière à faciliter les passages et adapter en permanence l'effort d'assistance au passage et à la phase du passage de vitesse concernée.

## Revendications

1. Dispositif d'assistance actif au passage des vitesses pour boîte de vitesses à arbres parallèles comprenant un moteur électrique d'assistance (12) piloté agissant parallèlement au conducteur sur un levier de passage (9) externe à la boîte selon la vitesse à engager et la phase de l'engagement pour faciliter les passages, **caractérisé en ce que** ce le moteur d'assistance (12) est logé dans un boîtier de protection fermé (13), intégré au palier (2) d'un axe de commande interne (3) solidaire du levier (9).

2. Dispositif d'assistance selon la revendication 1, **caractérisé en ce que** le boîtier de protection (13) part d'une excroissance du palier (2) de l'axe de commande interne (3).

3. Dispositif d'assistance selon la revendication 2, **caractérisé en ce que** le moteur d'assistance (12) agit sur le levier de passage (9) par l'intermédiaire d'un système multiplicateur de vitesse (19) constitué par un train épicycloïdal.

4. Dispositif d'assistance selon la revendication 3 5, **caractérisé en ce que** le dispositif multiplicateur (19) est logé dans le même boîtier (13) que le moteur d'assistance (12).

5. Dispositif d'assistance selon la revendication 3 ou 4, **caractérisé en ce que** le dispositif multiplicateur de vitesses (18) comprend une couronne fixe (21) faisant partie du boîtier (13), un planétaire (22) solidaire de l'axe (18) du moteur un porte-satellites (23) lié à un levier d'assistance (24) de du levier de passage (9), et au moins un satellite (25) entraîné par le porte-satellites (23).

6. Dispositif d'assistance selon la revendication, **caractérisé en ce que** le levier de passage (9) porte un pion d'entraînement (26) se déplaçant dans une ouverture (24a) du levier d'assistance (24).

7. Dispositif d'assistance selon la revendication 5 ou 6, **caractérisé en ce que** le levier d'assistance (24) entraîne un potentiomètre (27) indiquant sa position angulaire à un calculateur de pilotage.

8. Dispositif d'assistance selon la revendication 7, **caractérisé en ce que** le potentiomètre (27) possède un doigt d'entraînement (28) du levier d'assistance (24).

9. Dispositif d'assistance selon la revendication 8, **caractérisé en ce que** le doigt d'entraînement (28) du potentiomètre (27) se déplace dans un évidement (24b) du levier d'assistance (24).
